Europäisches Patentamt

European Patent Office

Office européen des brevets

(19)

(11) Numéro de publication : **0 327 771 B1**

# (12) FASCICULE DE BREVET EUROPEEN

(45) Date de publication du fascicule du brevet :
29.05.91 Bulletin 91/22

(51) Int. Cl.⁵ : **F01D 25/24,** F01D 5/06,
F16B 41/00

(21) Numéro de dépôt : 88403190.7

(22) Date de dépôt : 15.12.88

(54) **Dispositif cache-boulons pour turbomachine.**

(30) Priorité : 16.12.87 FR 8717548

(43) Date de publication de la demande :
16.08.89 Bulletin 89/33

(45) Mention de la délivrance du brevet :
29.05.91 Bulletin 91/22

(84) Etats contractants désignés :
DE FR GB

(56) Documents cités :
GB-A- 541 764
GB-A- 2 057 617
US-A- 3 727 660
US-A- 4 190 397

(73) Titulaire : SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)

(72) Inventeur : Touze, Eric
81, Square Marie Curie
F-77350 Le Mee sur Seine (FR)

(74) Mandataire : Moinat, François et al
S.N.E.C.M.A. Service des Brevets Boîte
Postale 81
F-91003 Evry Cédex (FR)

EP 0 327 771 B1

## Description

La présente invention concerne un dispositif de fixation à vis sur une bride annulaire de turbomachine, les têtes de vis étant recouvertes d'un carénage annulaire ou cache-boulons.

Lorsque des vis sont utilisées pour la fixation d'un élément sur une bride annulaire, notamment dans des applications aux turbomachines, il s'avère nécessaire pour éviter des perturbations néfastes dans les écoulements aérodynamiques d'air ou de gaz, lorsque les têtes de vis sont placées dans l'écoulement, de les recouvrir d'un tel carénage annulaire ou cache-boulons.

US-A 3 727 660 décrit ainsi un exemple d'application à un compresseur dans lequel un cache-boulons est utilisé, aménagé en outre de manière à assurer la rétention des éléments en cas de dévissage accidentel ou perte d'un élément pour une raison quelconque et à éviter ainsi qu'un tel élément entraîné dans la veine de circulation des gaz ne cause des dommages qui peuvent être importants. La solution proposée, malgré ses avantages, impose cependant un blocage global de tous les boulons ce qui dans certaines applications peut présenter des inconvénients pour les opérations de montage-démontage, notamment lors des opérations de maintenance ne nécessitant d'intervention que sur une seule vis, par exemple.

La solution mise en oeuvre par l'invention résoud de manière plus satisfaisante les différents problèmes posés sans présenter les inconvénients des solutions connues antérieures. Selon l'invention, un dispositif de fixation à vis utilisant une cache-boulons annulaire est caractérisé en ce que ledit cache-boulons porte, à l'intérieur et respectivement au droit de chaque vis, une pluralité de premières douilles cylindriques, de diamètre supérieur à celui des têtes de vis et solidaires au niveau respectif de trous d'accès auxdites vis, de la face du cache-boulons opposée auxdites vis, portant chacune deux pattes latérales disposées symétriquement, légèrement rentrées et coopérant chacune avec un des quatre perçages qui sont ménagés sur une deuxième douille disposée à l'intérieur de chaque première douille et comportant un bord aval rétreint sur lequel la tête de vis à douze dents forme son empreinte

D'autres caractéristiques et avantages de l'invention seront mieux compris à la lecture de la description qui va suivre d'un mode de réalisation de l'invention, en référence aux dessins annexés sur lesquels :

– la figure 1 représente une vue schématique générale d'une turbomachine sur laquelle est utilisé le dispositif de fixation à vis associées à un cache-boulons, conforme à l'invention et représenté par un arraché, vu en coupe longitudinale par un plan passant par l'axe de rotation de la turbomachine,

– la figure 2 montre un détail agrandi de la partie arrachée selon I de la figure 1, vue en coupe longitudinale par un plan passant par l'axe de rotation de la turbomachine.

– la figure 3 montre, suivant un détail agrandi de la figure 2, le dispositif de fixation représenté aux figures 1 et 2,

– la figure 4 représente une vue en coupe selon la ligne IV-IV de la figure 3 du dispositif de fixation représenté à la figure 3,

– la figure 5 représente une vue partielle suivant la flèche F du dispositif de fixation représenté à la figure 3

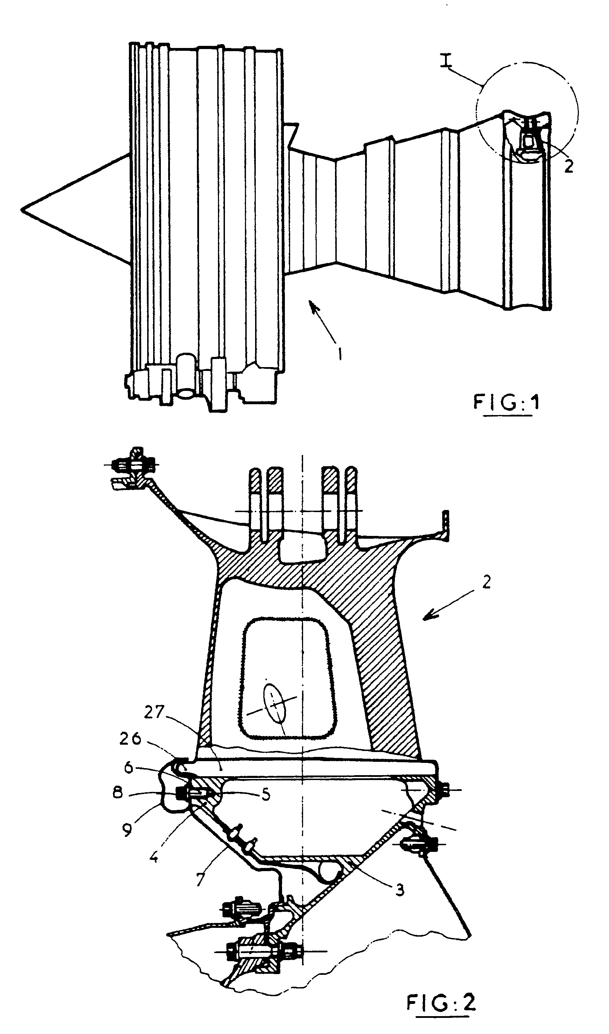

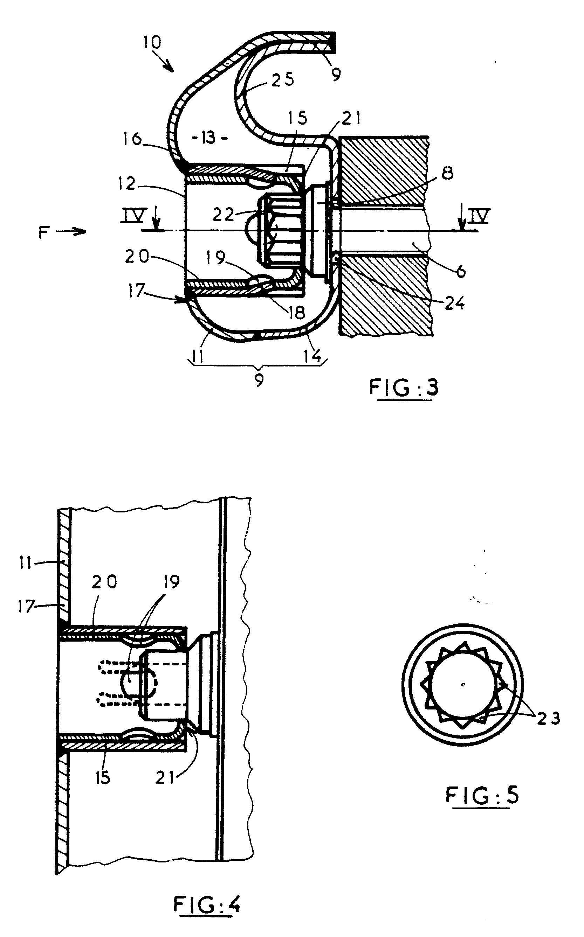

La turbomachine 1 représentée schématiquement à la figure 1 comporte en sortie de turbine un carter d'échappement 2 sur lequel côté aval est fixé le canal d'éjection (non représenté aux dessins). Comme représenté plus en détail à la figure 2, le carter d'échappement 2 comporte un moyeu 3 portant côté amont une bride annulaire 4 munie de trous taraudés 5 de fixation, régulièrement répartis. Ces trous 5 reçoivent des vis 6 destinées notamment, dans l'exemple d'application représenté aux dessins, à la fixation sur ladite bride 4 d'un couvercle de ventilation 7. Les têtes 8 des vis 6 sont recouvertes d'un carénage annulaire dont la forme obtenue à partir de tôle est adaptée pour assurer un écoulement des gaz dans de bonnes conditions aérodynamiques et qui constitue un cache-boulons 9. Le dispositif de fixation 10 conforme à l'invention et constitué du cache-boulons 9 et des vis 6 est représenté plus en détails aux figures 3 à 5. Au droit de chaque vis 6, le cache-boulons 9 comporte sur sa face externe 11 de carénage des trous 12 d'accès. Dans l'espace annulaire interne 13 du cache-boulons 9, ménagé entre sa face externe 11 et sa face interne 14 et où sont logées lesdites têtes 8 des vis 6, sont disposées des premières douilles cylindriques 15 solidaires de ladite face externe 11 et, dans l'exemple représenté aux figures 3 à 5, soudées à une extrémité 16 au bord circulaire 17 desdits trous 12 d'accès. Les deux parties 11 et 14 du cacheboulons 9 peuvent par exemple être également soudées l'une à l'autre pour en faciliter la fabrication. Chaque première douille 15 porte latéralement deux languettes 18 légèrement rentrées. Lesdites languettes 18 obtenues par découpes de la première douille 15 coopèrent avec des perçages 19 ménagés sur le flanc d'une deuxième douille 20 placée à l'intérieur de la première douille 15. Les perçages 19 sont par exemple au nombre de quatre. Côté interne, l'extrémité de chaque deuxième douille 20 présente un rétreint 21 qui coopère avec l'extrémité 22 de la tête 8 de vis 6, qui présente une section transversale dentelée comportant par exemple douze dents 23.

Le mode de montage de l'ensemble qui vient d'être décrit est le suivant. Le cache-boulons 9 à douilles internes 15 étant positionné sur les pièces à assembler, couvercle de ventilation 7, et bride annulaire 4 du carter d'échappement 2, les vis 6 sont montées et serrées dans les trous taraudés 5 de ladite bride, passant par les trous d'accès 12 ainsi qu'à travers des trous de fixation 24 percés dans la partie interne 14 du cache-boulons 9 et les têtes 8 des vis 6 venant en appui sur les bords de ces trous 24. Les deuxièmes douilles 20 sont alors avancées vers l'intérieur du cache-boulons 9 par les trous d'accès 12 puis pivotées afin de faire correspondre les trous 19 avec les languettes 18, ensuite elles sont poussées à force, de manière à ce que le rétreint 21 s'adapte sur l'extrémité 22 de tête de vis et ce, jusqu'à ce que les languettes 18 aient pénétré dans les perçages 19 des deuxièmes douilles 20. Les dents 23 de tête de vis refoulent le métal du rétreint 21 de douille jusqu'à y former leur empreinte.

Il résulte des dispositions décrites que la vis 6 est bloquée en rotation, en évitant ainsi tout desserrage accidentel, par le blocage des dents 23 d'extrémité sur le rétreint 21 de la deuxième douille 20. En outre, lorsque, par exemple par suite d'un défaut de maintenance ayant entraîné une usure de ladite deuxième douille 20 conservée après plusieurs montages/démontages, il se produit un desserrage accidentel de la vis 6, la vis est encore retenue par la deuxième douille 20 qui reste solidaire du cache-boulons 9 grâce aux languettes 18 de la première douille 15.

L'ensemble obtenu conserve toutefois sa démontabilité. Il suffit en effet, à l'aide d'un outil adapté, d'appuyer sur lesdites languettes 18 pour dégager la deuxième douille 20 qui peut être retirée vers l'extérieur l'accès aux têtes des vis 6 étant assuré par les trous d'accès 12 du cache-boulons 9.

Dans le mode de réalisation et l'application décrits et représentés aux dessins, le cache-boulons 9 comporte en outre du côté aval une gorge annulaire 25 où se placent les bords amont 26 de tuiles 27 de protection thermique du moyeu 3 du carter d'échappement de la turbomachine.

## Revendications

1. Dispositif de fixation d'une pièce de révolution sur une bride annulaire de turbomachine, constitué de vis (6) régulièrement réparties dont les têtes sont recouvertes d'un carénage annulaire formant un cache-boulons (9) caractérisé en ce que ledit cache-boulons (9) porte, à l'intérieur et respectivement au droit de chaque vis (6), une pluralité de premières douilles cylindriques (15), de diamètre supérieur à celui des têtes (8) de vis, solidaires au niveau respectif de trous d'accès auxdites vis (6) de la face (11) du cache-boulons (9) opposée auxdites vis (6) et comportant chacune deux languettes (18) disposées symétriquement, légèrement rentrées, qui coopèrent chacune avec un des quatre perçages (19) qui sont ménagés sur une deuxième douille (20) disposée à l'intérieur de chaque première douille (15) et comportant un bord aval rétreint (21) sur lequel la tête (8) de vis à douze dents (23) forme son empreinte.

2. Dispositif de fixation à vis associées à un cache-boulons selon la revendication 1 dans lequel le cache-boulons (9) est constitué de deux parties soudées (11, 14) et lesdites premières douilles cylindriques (15) ont leur base soudée au bord desdits trous d'accès (12) de la face (11) du cache-boulons.

3. Dispositif de fixation à vis associées à un cache-boulons selon l'une des revendications 1 ou 2 dans lequel ladite pièce de révolution est constituée par un couvercle de ventilation (7) fixé sur la bride annulaire (4) amont du moyeu (3) d'un carter d'échappement (2) de turbomachine et sur la face aval (14) dudit cache-boulons (9) est ménagée une gorge annulaire (25) supportant le bord amont (26) de tuiles (27) de protection thermique dudit moyeu (3).

## Ansprüche

1. Vorrichtung zur Befestigung eines Drehteils an einem ringförmigen Flansch einer Turbomaschine, bestehend aus in regelmäßiger Verteilung angeordneten Schrauben (6), deren Köpfe von einer eine Schraubensicherung (9) bildenden ringförmigen Verkleidung abgedeckt sind, **dadurch gekennzeichnet,** daß die Schraubensicherung (9) innen an der Stelle der einzelnen Schrauben (6) mehrere erste zylindrische Hülsen (15) trägt, deren Durchmesser größer als derjenige der Schraubenköpfe (8) ist und die jeweils auf dem Niveau von Zugangslöchern für die Schrauben (6) mit der den Schrauben (6) entgegengesetzten Seite (11) der Schraubensicherung (9) fest verbunden sind, und daß jede dieser Hülsen (15) zwei symmetrisch angeordnete, leicht eingezogene Zungen aufweist, die jeweils mit einem von vier Durchbrüchen (19) zusammenwirken, die an einer zweiten Hülse (20) angebracht sind, die im Innern jeder ersten Hülse (15) angeordnet ist und einen zusammengezogenen stromabwärtigen Rand (21) besitzt, auf dem der mit zwölf Kanten (23) versehenen Schraubenkopf (8) seine Einprägung bildet.

2. Befestigungsvorrichtung mit einer Schraubensicherung zugeordneten Schrauben nach Anspruch 1, in der die Schraubensicherung (9) aus zwei miteinander verschweißten Teilen (11, 14) besteht und die genannten ersten zylindrischen Hülsen (15) an ihrer Basis mit dem Rand der Zugangslöcher (12) der genannten Seite (11) der Schraubensicherung verschweißt sind.

3. Befestigungsvorrichtung mit einer Schraubensicherung zugeordneten Schrauben nach einem der Ansprüche 1 oder 2, in der das genannte Drehteil aus einer auf dem ringförmigen Flansch (4) stromaufwärts der Nabe (3) eines Turbomaschinen-Auslaßgehäuses (2) befestigten Lüftungsabdeckung (7) besteht und auf der stromabwärtigen Seite (14) der Schraubensicherung (9) eine ringförmige Kehle (25) angebracht ist, die den stromaufwärtigen Rand (26) von Platten (27) für den Wärmeschutz der Nabe (3) abstützt.

## Claims

1. Fixing device for fixing a body of revolution onto an annular flange of a turboshaft engine, consisting of uniformly distributed screw bolts (6) of which the heads are covered by an annular shroud forming a bolt head cover (9) characterised in that the said bolt head cover (9) carries within it and respectively at the point of each screw bolt (6), a plurality of first cylindrical bushes (15), of a diameter greater than that of the bolt heads (8), firmly attached at the respective point of access holes in the face (11) of the bolt head cover (9) giving access to the said screw bolts (6) and opposite the said screw bolts (6) and each comprising two tongues (18) arranged symmetrically and slightly reentrant, which each engage with one of four holes (19) formed in a second bush (20) placed inside each first bush (15) and comprising a necked downstream edge (21) on which the head (8) of the screw bolt with twelve teeth (23) impresses itself.

2. Fixing device using screw bolts associated with a bolt head cover in accordance with Claim 1 in which the bolt head cover (9) is made up of two welded parts (11, 14) and the said first cylindrical bushes (15) have their base welded to the rim of the said access holes (12) on the face (11) of the bolt head cover.

3. Fixing device using screw bolts associated with a bolt head cover in accordance with either of Claims 1 or 2 in which the said body of revolution is constituted by a ventilating cover (7) fixed to the upstream annular flange (4) of the hub (3) of the exhaust gas duct (2) of the turboshaft engine and on the downstream face (14) of the said bolt head cover (9) is formed an annular throat (25) supporting the upstream edge (26) of thermal protection tiles (27) for the said hub (3).

FIG:1

FIG:2

FIG:3

FIG:4

FIG:5